# EUROPEAN PATENT APPLICATION

(11) **EP 4 749 209 A1**
(43) Date of publication of application: **27.05.2026**
(21) Application number: 24825362.7
(22) Date of filing: 19.08.2024
(51) Int. Cl.: F25B 41/35, F16K 11/044

(54) **ELECTRONIC EXPANSION VALVE**

(30) Priority: 19.06.2023 CN 202321595997 U; 30.11.2023 CN 202311636952; 30.11.2023 CN 202311631629
(71) Applicant: Zhejiang Dunan Artificial Environment Co., Ltd., Shaoxing Zhejiang 311835 (CN)
(72) Inventor: YANG, Zhongyu, Shaoxing, Zhejiang 311835 (CN); CAI, Peiyu, Shaoxing, Zhejiang 311835 (CN); FANG, Qidi, Shaoxing, Zhejiang 311835 (CN)
(74) Representative: Meyer-Dulheuer MD Legal Patentanwälte PartG mbB
(86) International application number: PCT/CN2024/113177
(87) International publication number: WO 2024/260478

(57) **Abstract**

An electronic expansion valve is provided in the present application. The electronic expansion valve includes a rotor assembly (100), a screw rod (200), a valve core assembly (300) and a valve base assembly (400). The valve core assembly (300) is configured to move relative to the valve base assembly (400) along an axis of the screw rod (200). One end of the screw rod (200) is fixed to the rotor assembly (100), an other end of the screw rod (200) is connected to the valve core assembly (300), and the rotor assembly (100) is configured to drive the valve core assembly (300) to move via the screw rod (200). The valve base assembly (400) is provided with a first valve port (440) and a second valve port (450). The electronic expansion valve is further provided with either or both of a first pre-tightening structure and a second pre-tightening structure.

## Description

### CROSS-REFERENCE TO RELATED APPLICATIONS

This application claims priority to Chinese patent applications No. 202311636952.8, filed on November 30, 2023, No. 202311631629.1, filed on November 30, 2023, and No. 202321595997.0, filed on June 19, 2023. The contents of the above identified applications are hereby incorporated herein in their entireties by reference.

### TECHNICAL FIELD

The present application relates to the field of valve body technologies, and in particular, to an electronic expansion valve.

### BACKGROUND

As a new type of control element, an electronic expansion valve has broken through a concept of a throttling mechanism in advance, which is an important link in an intelligence of a refrigeration system, an important means and guarantee that optimization of the refrigeration system can be truly realized, and an indication of electromechanical integration of a refrigeration system. The electronic expansion valve has been applied in more and more fields.

In the related art, in order to facilitate switching multiple flow paths, the related electronic expansion valve is generally provided with a plurality of valve ports. A valve core is closed and switched between a plurality of different valve ports, such that circulation of a plurality of different flow paths can be realized. However, in the related art, in the electronic expansion valve with the plurality of valve ports, it cannot ensure that the valve core and the plurality of valve ports have great sealing performance when the plurality of valve ports are in a closed state.

### SUMMARY

According to various embodiments of the present application, an electronic expansion valve is provided.

A electronic expansion valve in the present application includes a rotor assembly, a screw rod and a valve base assembly. A side wall of the valve base assembly is provided with a first port and a second port distributed along an axis of the valve base assembly. The valve base assembly is further provided with a first valve port and a second valve port. The first valve port is located between the first port and the second port. The second valve port is located on a side of the second port away from the first port. The valve core assembly is configured to move relative to the valve base assembly along the axis of the screw rod. One end of the screw rod is fixed to the rotor assembly, and another end of the screw rod is connected to the valve core assembly. When the rotor assembly drives the valve core assembly to move to a first preset position along a direction adjacent to the rotor assembly by the screw rod, the valve core assembly is configured to close the first valve port, and the second port is in communication with the second valve port. When the rotor assembly drives the valve core assembly to move to a second preset position along a direction away from the rotor assembly by the screw rod, the valve core assembly is configured to close the second valve port, and the first port is in communication with the second port by the first valve port. When the valve core assembly is disposed between the first preset position and the second preset position, the first port, the first valve port, the second port, and the second valve port are in communication with each other.

In an embodiment, a flow area of the second valve port is greater than that of the first valve port.

In an embodiment, an outer peripheral side of the valve core assembly is provided with a first flow regulating surface in a conical shape. Along a direction from the rotor assembly to the second valve port, the first flow regulating surface is in a contracted shape, and the first flow regulating surface is movably fitted with the second valve port to control an opening degree of the second valve port.

In an embodiment, an outer peripheral side of the valve core assembly is provided with a second flow regulating surface in a conical shape, the second flow regulating surface is in a divergent shape along a direction from the rotor assembly to the second valve port, and the second flow regulating surface is movably fitted with the first valve port to control an opening degree of the first valve port.

In an embodiment, the valve core assembly includes a main core body and a valve port sealing member. The valve port sealing member is sleeved on an outer peripheral side of the main core body and is in interference fit with the main core body. The valve core assembly is configured to control opening and closing of the first valve port via an end of the valve port sealing member adjacent to the rotor assembly, and the valve core assembly is configured to control opening and closing of the second valve port via an end of the valve port sealing member away from the rotor assembly.

In an embodiment, the valve base assembly includes a first valve base and a second valve base. The first valve port is disposed at an end of the first valve base away from the rotor assembly. The second valve base is connected to the end of the first valve base away from the rotor assembly and sleeved on an outer side of the first valve port. A maximum outer diameter of the main core body is less than an inner diameter of the first valve port. A maximum outer diameter of the valve port sealing member is greater than an inner diameter of the first valve port and less than an outer diameter of the first valve port.

In an embodiment, the electronic expansion valve further includes a second elastic sealing ring sandwiched between the main core body and the valve port sealing member and being in a compressed state.

In an embodiment, a connecting gap is provided between the main core body and the valve port sealing member. A mounting cavity in communication with the connecting gap is provided between the main core body and the valve port sealing member. The mounting cavity divides the connecting gap into a first gap and a second gap. The second elastic sealing ring is snapped in the mounting cavity and separates the mounting cavity into a first deposition cavity and a second deposition cavity. The first deposition cavity is in communication with the first gap. The second deposition cavity is in communication with the second gap.

In an embodiment, one of the main core body and the valve port sealing member is provided with a mounting groove, and an other of the main core body and the valve port sealing member is blocked at an opening of the mounting groove to form a mounting cavity.

In an embodiment, the electronic expansion valve further includes a stop base. The stop base is connected to the valve base assembly. The valve core assembly further includes a sliding nut. An end of the screw rod away from the rotor assembly is in threaded fit with the sliding nut. The sliding nut is in fit with the stop base or the valve base assembly by a restricting structure. The screw rod is configured to drive the sliding nut to cause the valve core assembly to move along the axis of the screw rod to open or close the first valve port and the second valve port. The restricting structure is configured to prevent the sliding nut from rotating around an axis of the screw rod.

In an embodiment, a periphery of the sliding nut is provided with an anti-rotation protrusion extending along a radial direction of the sliding nut. The stop base or the valve base assembly is provided with a guide groove extending along an axis of the electronic expansion valve and corresponding to the anti-rotation protrusion. An end of the anti-rotation protrusion away from the sliding nut extends into the guide groove and is slidably in fit with the guide groove along the axis of the electronic expansion valve. The restricting structure is formed by the anti-rotation protrusion and the guide groove.

In an embodiment,the valve core assembly is configured to move relative to the valve base assembly along an axis of the screw rod. One end of the screw rod is fixed to the rotor assembly, and another end of the screw rod is connected to the valve core assembly. The rotor assembly is configured to drive the valve core assembly to move via the screw rod. The valve base assembly is provided with a first valve port and a second valve port. The electronic expansion valve is further provided with either or both of a first pre-tightening structure and a second pre-tightening structure. When the screw rod drives the valve core assembly to block the first valve port, the second pre-tightening structure is configured to apply an acting force for pressing the first valve port to the valve core assembly. When the screw rod drives the valve core assembly to block the second valve port, the first pre-tightening structure is configured to apply an acting force for pressing the second valve port to the valve core assembly.

In an embodiment, the valve core assembly includes a first valve needle and a second valve needle. The screw rod is configured to drive the first valve needle to cause the second valve needle to move along an axis of the first valve needle toward a direction adjacent to the rotor assembly, to close the first valve port via the second valve needle, and the screw rod is configured to drive the first valve needle to cause the second valve needle to move along the axis of first valve needle toward a direction away from the rotor assembly, to close the second valve port via the second valve needle.

In an embodiment, the first pre-tightening structure is configured as a first elastic member, one end of the first elastic member is connected to the screw rod, another end of the first elastic member is connected to the stop base. The first elastic member is further configured as a compression elastic member, the screw rod is movably fitted with the stop base along the axis of the screw rod via the first elastic member.

In an embodiment, the first elastic member is further configured as a compression elastic. The first elastic member is sleeved on the outer side of the screw rod.

In an embodiment, the electronic expansion valve further includes a first limiting member and a second limiting member. One of the first limiting member and the second limiting member is fixed to the stop base, and the other one of the first limiting member and the second limiting member is fixed to the screw rod. One end of the first elastic member is connected to the first limiting member, and another end of the first elastic member is connected to the second limiting member.

In an embodiment, one of the first limiting member and the second limiting member is configured as a bearing member, and the other one of the first limiting member and the second limiting member is configured as a step structure formed by an outer wall of the screw rod or an inner wall of the stop base.

In an embodiment, the second pre-tightening structure is configured as a third elastic member, one end of the third elastic member is connected to the first valve needle, another end of the third elastic member is connected to the second valve needle, and the third elastic member is configured as a compression elastic member, such that the first valve needle and the second valve needle are movably fitted with each other along the axis of the screw rod via the third elastic member.

In an embodiment, the third elastic member is configured as a compression spring. The third elastic member is sleeved outside one part of the first valve needle. The second valve needle is sleeved outside another part of the first valve needle. The third elastic member is located between the first valve needle and the second valve needle.

In an embodiment, the electronic expansion valve further includes a third limiting member and a fourth limiting member. One of the third limiting member and the fourth limiting member is fixedly connected to the first valve needle, and the other one of the third limiting member and the fourth limiting member is fixed to the second valve needle. One end of the third elastic member is connected to the third limiting member, and another end of the third elastic member is connected to the fourth limiting member.

In an embodiment, the electronic expansion valve further includes a third elastic sealing ring. The third elastic sealing ring is sandwiched between an outer wall of the second valve needle and an inner wall of the valve base assembly and being in a compressed state. The outer wall of the second valve needle is movably in sealing fit with the valve base assembly via the third elastic sealing ring.

In an embodiment, the second valve needle is provided with a first channel extending therethrough. A part of the first valve needle is located in the first channel. The first valve needle is provided with a first groove in communication with the first channel. A side wall of the first groove is provided with a first hole, and the first hole is in communication with the valve cavity.

In an embodiment, the electronic expansion valve further includes a sleeve. An end of the first valve needle is connected to the sleeve. An end of the screw rod adjacent to the first valve needle is located in the sleeve. The first pre-tightening structure is configured as a first elastic member. The first elastic member is disposed in the sleeve and between the screw rod and the first valve needle. The screw rod is configured to compress the first elastic member after moving relative to the sleeve along a direction adjacent to the second valve port.

Details of one or more embodiments of the present application are presented in the attached drawings and descriptions below. And other features, purposes and advantages of this disclosure will become apparent from the description, drawings and claims.

### BRIEF DESCRIPTION OF THE DRAWINGS

In order to illustrate the embodiments of the present application more clearly, the drawings used in the embodiments will be described briefly. Apparently, the following described drawings are merely for the embodiments of the present application, and other drawings can be derived by those of ordinary skill in the art without any creative effort.
FIG. 1 is a schematic diagram of an electronic expansion valve in an embodiment of the present application.
FIG. 2 is a partial schematic diagram of the electronic expansion valve shown in FIG. 1.
FIG. 3 is a cross-sectional view of an electronic expansion valve in an embodiment of the present application.
FIG. 4 is an enlarged view of portion A shown in FIG. 3.
FIG. 5 is a cross-sectional view of an electronic expansion valve in an embodiment of the present application.
FIG. 6 is a cross-sectional view of an electronic expansion valve in an embodiment of the present application.
FIG. 7 is a cross-sectional view of an electronic expansion valve in an embodiment of the present application.
FIG. 8 is a cross-sectional view of an electronic expansion valve in an embodiment of the present application.
FIG. 9 is a cross-sectional view of an electronic expansion valve in an embodiment of the present application.
FIG. 10 is a partial cross-sectional view of an electronic expansion valve in an embodiment of the present application.
FIG. 11 is a partial cross-sectional view of an electronic expansion valve in an embodiment of the present application.

Reference signs are as follows: 100 represents a rotor assembly; 200 represents a screw rod; 220 represents a first limiting member; 230 represents a second limiting member; 240 represents a first rod body step; 300 represents a valve core assembly; 310 represents a sliding nut; 311 represents an anti-rotation protrusion; 321 represents a first valve needle; 3212 represents a first needle body step; 3213 represents a first groove; 32131 represents a first hole; 322 represents a second valve needle; 3221 represents a first channel; 331 represents a first flow regulating surface; 332 represents a second flow regulating surface; 350 represents a main core body; 351 represents a second elastic sealing ring; 352 represents an assembly ring groove; 360 represents a valve port sealing member; 371 represents a first gap; 372 represents a second gap; 381 represents a first deposition cavity; 382 represents a second deposition cavity; 400 represents a valve base assembly; 420 represents a valve cavity; 431 represents a first port; 432 represents a second port; 440 represents a first valve port; 450 represents a second valve port; 460 represents a first valve base; 470 represents a second valve base; 480 represents a third elastic sealing ring; 510 represents a stop base; 515 represents a guide groove; 700 represents a valve body assembly; 610 represents a first elastic member; 630 represents a second elastic member; 660 represents a third limiting member; 670 represents a fourth limiting member; 800 represents a housing; 900 represents a stator assembly; 521 represents a fifth limiting member; and 122 represents a sleeve.

### DETAILED DESCRIPTION

In the description of the present application, it should be understood that the terms "center", "longitudinal", "transversely", "length", "width", "thickness", "up", "down", "left", "right", "vertical", "horizontal", "top", "bottom", "inside", "outside", "clockwise", "counterclockwise", "axial", "radial", "circumferential" and so on denoting an orientation or a position relationship are based on the orientation or the position relationship shown in the attached drawings, it is just for convenience and simple to describe the present application, but not indicating or implying an apparatus and a device having a specific orientation, constructing and operating in a specific orientation, therefore cannot be understood as limiting the present application.

In addition, the terms "first" and "second" are only used to describe the purpose and can not be understood as indicating or implying relative importance or implying the quantity of indicated technical features. Therefore, the features limited to "first" and "second" can explicitly or implicitly include at least one of these features. In the description of the present application, "multiple" means at least two, such as two, three, etc., unless there is an otherwise specific limitation.

In the present application, unless otherwise specified and limited, the terms "installation", "contact", "connection", "fixation" and so on should be broadly understood. For example, it may be a fixed connection, a detachable connection, or integrated; it may be a mechanical connection or an electrical connection; and it may be directly connected or indirectly connected through an intermediate medium, and may be a connection within two components or an interaction relationship between two components, unless otherwise specified. For ordinary skilled in the field, the specific meanings of the above terms in the present application may be understood as required.

In the present application, unless there is the otherwise specifications and limitations, the first feature is "above" or "below" the second feature which may be a direct contact between the first and second features, or the first features and the second features may be in indirect contact through an intermediate medium. Moreover, the first feature is "on", "above", and "over" the second feature can be that the first feature is directly or diagonally above the second feature, or only indicates that the first feature is horizontally higher than the second feature. The first feature is "beneath", "below", and "under" the second feature can be that the first feature is directly or diagonally below the second feature, or only indicate that the horizontal height of the first feature is less than that of the second feature.

It should be noted that, when a member is considered "fixed to" or "set on" another member, it can be directly fixed to another member or there may be a centered member present simultaneously. When a member is considered "connected to" another member, it can be directly connected to another member or there may be a centered member present simultaneously. The terms "vertical", "horizontal", "up", "down" "left", "right" and similar expressions used in the specification of the present application are for illustrative purposes only and do not represent the only implementation method.

Unless otherwise defined, all technical and scientific terms used in the article have the same meanings as those commonly understood by those skilled in the art of the present application. The terms used in the specification of the present application are only for the purpose of describing specific embodiments and are not intended to limit the present application. The term "and/or" used in this article includes any and all combinations of one or more related listed items.

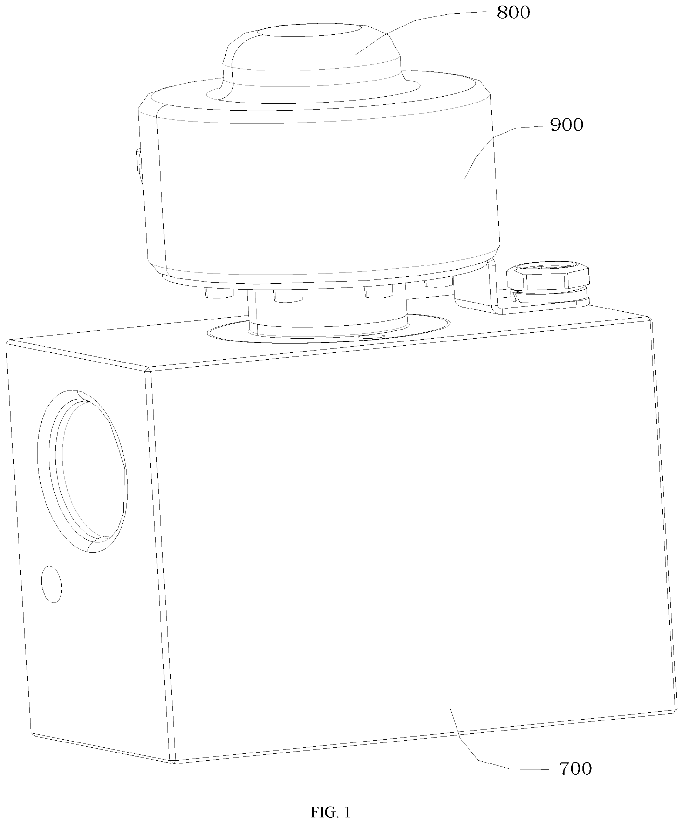

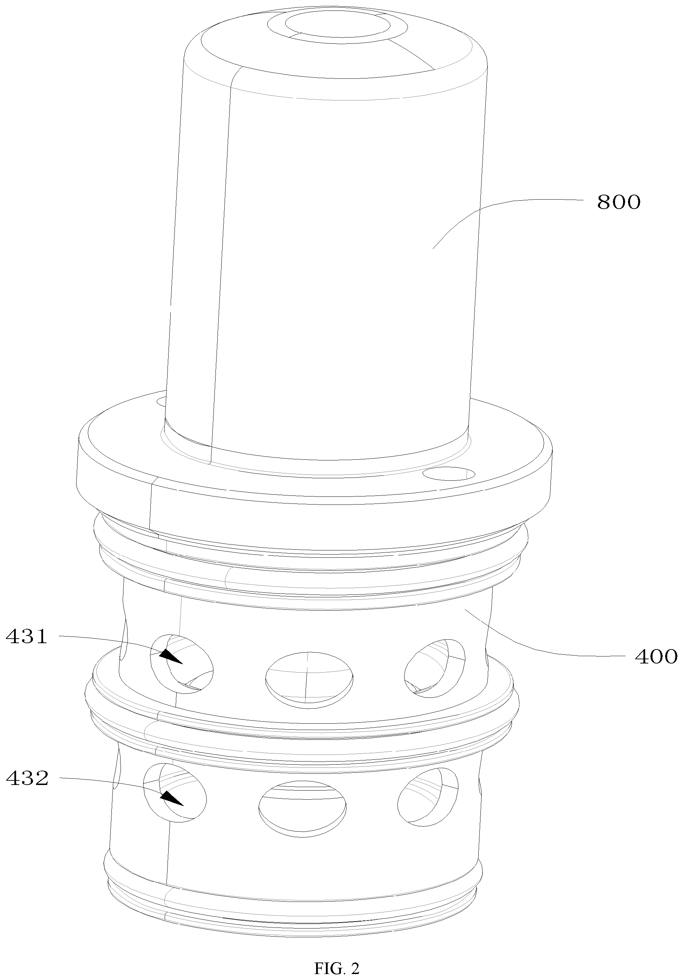

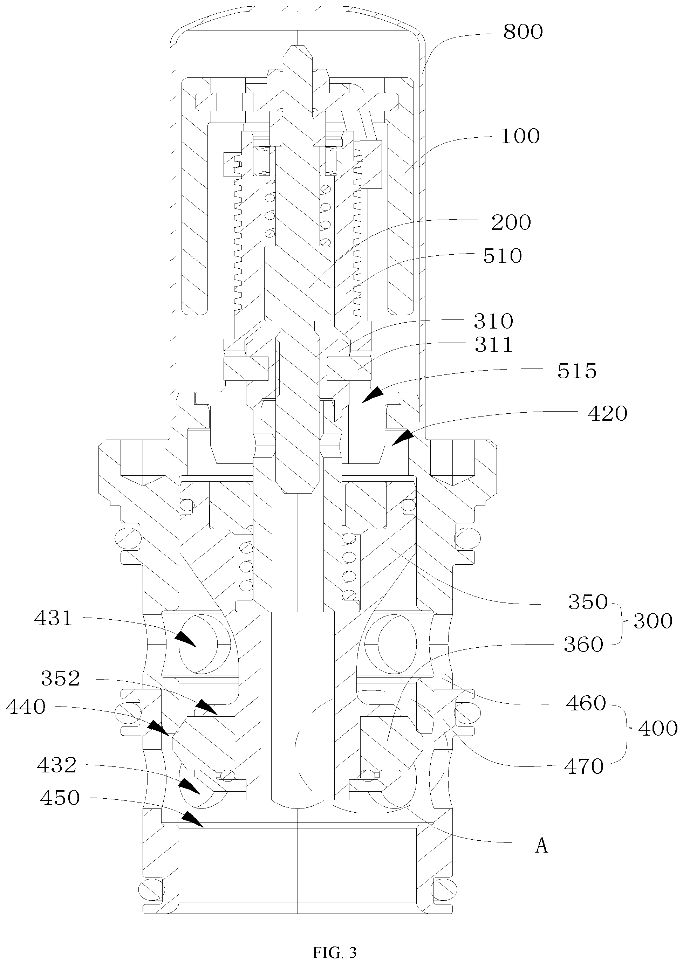

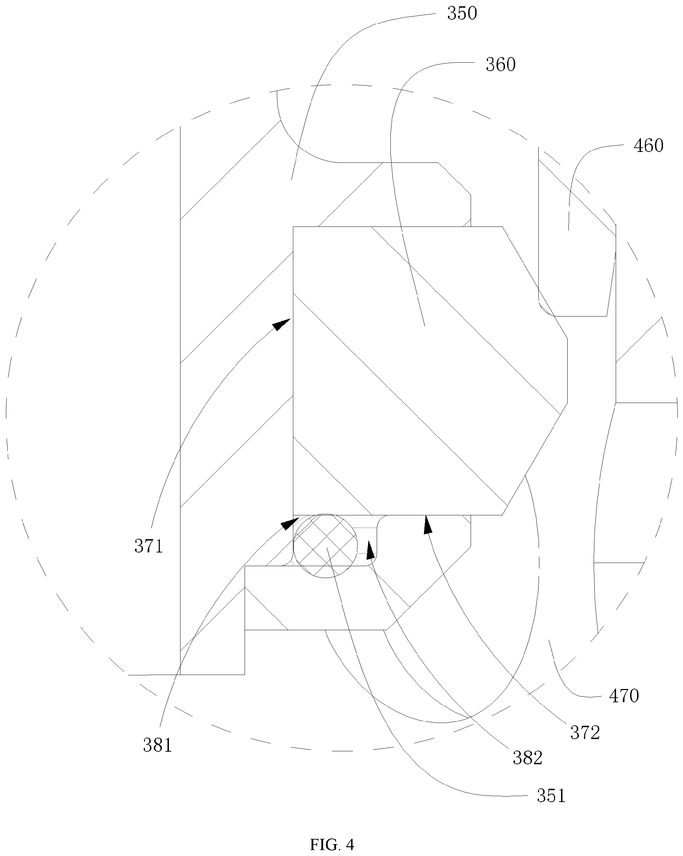

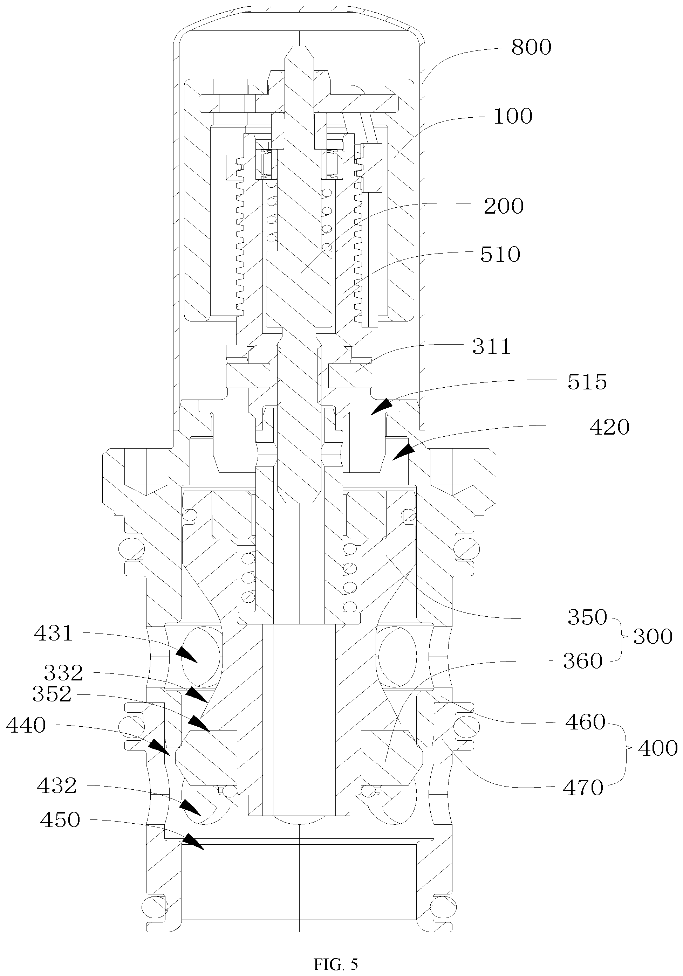

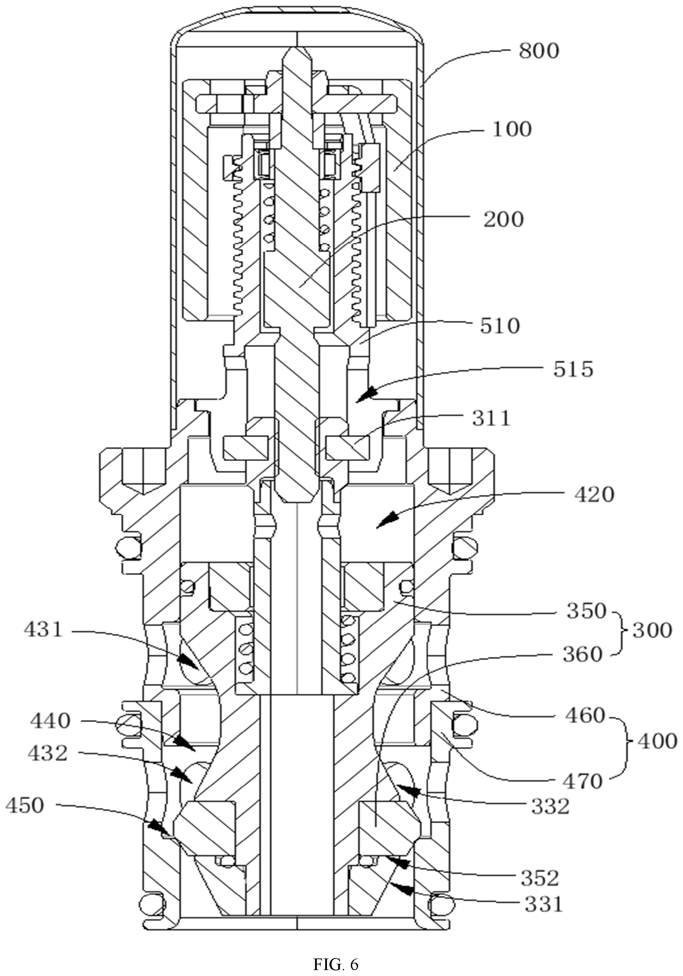

Referring to FIGs. 1 to 6, an electronic expansion valve is provided, which includes a rotor assembly 100, a screw rod 200, a valve core assembly 300, and a valve base assembly 400. A side wall of the valve base assembly 400 is provided with a first port 431 and a second port 432 distributed along an axis of the valve base assembly 400. The valve base assembly 400 is further provided with a first valve port 440 and a second valve port 450. The first valve port 440 is located between the first port 431 and the second port 432. The second valve port 450 is located on a side of the second port 432 away from the first port 431. The valve core assembly 300 can move relative to the valve base assembly 400 along an axis of the screw rod 200. One end of the screw rod 200 is fixedly connected to the rotor assembly 100, and another end of the screw rod 200 is connected to the valve core assembly 300.

When the rotor assembly 100 drives the valve core assembly 300 to move to a first preset position along a direction adjacent to the rotor assembly 100 via the screw rod 200, the valve core assembly 300 can close the first valve port 440 and the second port 432 is in communication with the second valve port 450.

When the rotor assembly 100 drives the valve core assembly 300 to move to a second preset position along a direction away from the rotor assembly 100 via the screw rod 22, the valve core assembly 300 can close the second valve port 450 and the first port 431 is in communication with the second port 432 via the first valve port 440.

When the valve core assembly 300 is disposed between the first preset position and the second preset position, the first port 431, the first valve port 440, the second port 432, and the second valve port 450 are in communication with each other.

It should be noted that technical solutions of driving methods of the electronic expansion valve in the above embodiments can be applied to the present embodiment.

It should be noted that the first port 431 and the second port 432 are configured to connect to different external pipelines, respectively.

By such arrangement, the valve core assembly 300 can be driven by the screw rod 200 to move toward or away from the rotor assembly 100, so as to control opening and closing of the first valve port 440 and the second valve port 450, respectively, such that three external communication ports of the first port 431, the second port 432 and the second valve port 450 can be in communication with each other, i.e., three-way function of the electronic expansion valve can be realized.

It should be noted that the electronic expansion valve further includes a housing 800. The housing 800 covers and is configured to accommodate the rotor assembly 100, a part of the screw rod 200, and a part of the valve core assembly 300 and is welded to the valve base.

In an embodiment, the screw rod 200 is movably in threaded fit with the valve core assembly 300. In an embodiment, the screw rod 200 moves vertically along the axis of the electronic expansion valve to drive the valve core assembly 300 to move vertically.

In an embodiment, a flow area of the second valve port 450 is greater than that of the first valve port 440.

By such arrangement, the second port 432 can be in communication with the second valve port 450 to form a large-flow regulating valve. The first port 431 can be in communication with the first valve port 440 to form a small-flow regulating valve.

Both the first valve port 440 and the second valve port 450 are in a circular shape.

Furthermore, in an embodiment, an outer peripheral side of the valve core assembly 300 is provided with a first flow regulating surface 331 in a conical shape. Along a direction from the rotor assembly 100 to the second valve port 450, the first flow regulating surface 331 is in a contracted shape, and the first flow regulating surface 331 is movably fitted with the second valve port 450 to control an opening degree of the second valve port 450.

The first flow regulating surface 331 is disposed at an end of the valve core assembly 300 away from the rotor assembly 100, and by providing the first flow regulating surface 331 in the shape of a conical surface, when the valve core assembly 300 moves towards the rotor assembly 100, a distance between the second valve port 450 and the first flow regulating surface 331 increases, the opening degree of the second valve port 450 increases, so as to smoothly adjust the opening degree of the second valve port 450.

Furthermore, in an embodiment, an outer peripheral side of the valve core assembly 300 is provided with a second flow regulating surface 332. The second flow regulating surface 332 in a conical shape. The second flow regulating surface 332 is in a divergent shape along a direction from the rotor assembly 100 to the second valve port 450. The second flow regulating surface 332 is movably fitted with the first valve port 440 to control an opening degree of the first valve port 440.

The second flow regulating surface 332 is disposed on a side of the first flow regulating surface 331 adjacent to the rotor assembly 100. By the second flow regulating surface 332 in the conical shape, when the valve core assembly 300 moves in a direction away from the rotor assembly 100, a distance between the first valve port 440 and the second flow regulating surface 332 increases, and at the same time, the opening degree of the first valve port to increases to smoothly adjust the opening degree of the first valve port 440.

It should be noted that only one of the first flow regulating surface 331 and the second flow regulating surface 332 may be disposed on the outer peripheral side of the valve core assembly 300, and the electronic expansion valve is equivalent to integrating a regulating valve and a stop valve. Alternatively, the outer peripheral side of the valve core assembly 300 may be provided with the first flow regulating surface 331 and the second flow regulating surface 332, and the electronic expansion valve is equivalent to integrating two regulating valves. Alternatively, neither the first flow regulating surface 331 nor the second flow regulating surface 332 may be disposed on the outer peripheral side of the valve core assembly 300, and the electronic expansion valve is equivalent to integrating two stop valves.

A sealing component is provided between an outer wall of the valve core assembly 300 and an inner wall of the valve base assembly 400. The valve core assembly 300 is movably in sealing fit with the valve base assembly 400 via the sealing assembly. The valve base assembly 400 is provided with a valve cavity 420. The first valve port 440 and the second valve port 450 are both in communication with a valve cavity 420 located at an end of the valve base assembly 400 adjacent to the rotor assembly 100. When the valve core assembly 300 blocks the first valve port 440, an area of a sealing region enclosed by the valve core assembly 300 and the first valve port 440 is defined as *S1.* When the valve core assembly 300 blocks the second valve port 450, a sealing area of a sealing region enclosed by the valve core assembly 300 and the second valve port 450 is defined as *S2,* and a sealing area enclosed by the valve core assembly 300 and the valve base assembly 400 via the sealing assembly is defined as *S3.* The area *S1* of the sealing region enclosed by the valve core assembly 300 and the first valve port 440 is equal to the sealing area *S2* of the sealing region enclosed by the valve core assembly 300 and the second valve port 450 and the sealing area *S3* enclosed by the valve core assembly 300 and the valve base assembly 400 via the sealing assembly. The sealing area *S3* enclosed by the valve core assembly 300 is defined as an area enclosed by the sealing assembly and an outer wall of the valve base assembly 400.

By such arrangement, two ends of the valve core assembly 300 along the axis of the valve core assembly 300 received equal refrigerant pressure can be ensured, such that the valve core is in a force-balanced state.

In an embodiment, the valve core assembly 300 includes a main core body 350 and a valve port sealing member 360. The valve port sealing member 360 is sleeved on an outer peripheral side of the main core body 350 and is in interference fit with the main core body 350. The valve core assembly 300 controls the opening and the closing of the first valve port 440 via an end of the valve port sealing member 360 adjacent to the rotor assembly 100. The valve core assembly 300 controls the opening and the closing of the second valve port 450 via an end of the valve port sealing member 360 away from the rotor assembly 100.

The main core body 350 is configured as a metal piece, and the valve port sealing member 360 is configured as an injection molded member, facilitating improving a sealing performance of the valve core assembly 300.

Furthermore, the electronic expansion valve further includes a stop base 510 connected to the valve base assembly 400. The stop base 510 is sleeved outside the screw rod 200. The valve core assembly 300 further includes a sliding nut 310. One end of the screw rod 200 away from the rotor assembly 100 is in threaded fit with the sliding nut 310. The sliding nut 310 is in fit with the stop base 510 (or the valve base assembly 400) via a restricting structure, such that the screw rod 200 can drive the sliding nut 310 to cause the valve core assembly 300 to move relative to the stop base 510 along the axis of the screw rod 200, in order to open or close the first valve port 440 and the second valve port 450, and the restricting structure can prevent the sliding nut 310 from rotating relative to the stop base 510 around the axis of the screw rod 200.

A periphery of the sliding nut 310 is provided with an anti-rotation protrusion 311 extending along a radial direction of the sliding nut 310. The stop base 510 or the valve base assembly 400 is provided with a guide groove 515 extending along an axis of the stop base 510 or the valve base assembly 400 corresponding to the anti-rotation protrusion 311. An end of the anti-rotation protrusion 311 away from the sliding nut 310 extends into the guide groove 515 and can be in sliding fit with the guide groove 515 along the axis of the stop base 510, such that the sliding nut 310 is in sliding fit with the stop base 510 (or the valve base assembly 400) along the axis of the stop base 510. In addition, the restricting structure is formed by the anti-rotation protrusion 311 and the guide groove 515.

Furthermore, in an embodiment, the valve base assembly 400 includes a first valve base 460 and a second valve base 470. The first valve port 440 is disposed at an end of the first valve base 460 away from the rotor assembly 100. The second valve base 470 is connected to an end of the first valve base 460 away from the rotor assembly 100 and sleeved on an outer side of the first valve port 440. A maximum outer diameter of the main core body 350 is less than an inner diameter of the first valve port 440. A maximum outer diameter of the valve port sealing member 360 is greater than the inner diameter of the first valve port 440 and less than an outer diameter of the first valve port 440. An inner diameter of the first valve port 440 is an opening diameter of the first valve port 440. The outer diameter of the first valve port 440 is equal to an inner diameter of the second valve base 470 sleeved on the outer side of the first valve port 440.

The second valve port 450 is disposed on the second valve base 470.

Since the maximum outer diameter of the valve port sealing member 360 is less than the outer diameter of the first valve port 440, and the second valve base 470 is sleeved on the outer side of the first valve port 440, the maximum outer diameter of the valve port sealing member 360 is less than the inner diameter of the second valve base 470 sleeved on the outer side of the first valve port 440, while it is still required to be ensured that the maximum outer diameter of the valve port sealing member 360 is greater than the inner diameter of the second valve port 450. The inner diameter of the second valve port 450 is equal to an opening diameter of the second valve port 450. An outer diameter of the second valve port 450 is equal to the inner diameter of the second valve base 470 sleeved on the outer side of the first valve port 440.

The maximum outer diameter of the main core body 350 is greater than the inner diameter of the first valve port 440, such that when the valve core assembly 300 and the valve base assembly 400 are assembled, an end of the main core body 350, which is not provided with the valve port sealing member 360, may be inserted into the first valve base 460 via the first valve port 440, and then the second valve base 470 is synchronously sleeved on an end of the main core body 350 which is provided with the valve port sealing member 360 and an outer side of the first valve base 460. By such arrangement, assembly difficulty of the valve core assembly 300 and the valve base assembly 400 is greatly reduced.

The first valve base 460 may be welded, clamped, bonded, or threaded to the second valve base 470.

An outer peripheral side of the main core body 350 is provided with an assembly ring groove 352, and the annular valve port sealing member 360 is pressed into the assembly ring groove 352 in an extrusion manner to realize the assembly of the main core body 350 and the valve port sealing member 360.

It is not limited herein, in another embodiment, the electronic expansion valve further includes a valve body assembly 700. The second valve port 450 is disposed on the valve body assembly 700.

In an embodiment, the electronic expansion valve further includes a second elastic sealing ring 351, and the second elastic sealing ring 351 is sandwiched between the main core body 350 and the valve port sealing member 360 and being in a compressed state.

By such arrangement, when the main core body 350 and the valve port sealing member 360 are loosened and a gap is formed, the second elastic sealing ring 351 can block the gap between the main core body 350 and the valve port sealing member 360 via elastic deformation of the second elastic sealing ring, so as to prevent the valve core assembly 300 from leaking.

The second elastic sealing ring is made of rubber or silicone.

Furthermore, in an embodiment, a connecting gap is defined between the main core body 350 and the valve port sealing member 360. A mounting cavity in communication with the connecting gap is provided between the main core body 350 and the valve port sealing member 360. The mounting cavity divides the connecting gap into a first gap 371 and a second gap 372. The second elastic sealing ring is snapped in the mounting cavity and separates the mounting cavity into a first deposition cavity 381 and a second deposition cavity 382. The first deposition cavity 381 is in communication with the first gap 371. The second deposition cavity 382 is in communication with the second gap 372.

By such arrangement, leaked refrigerant can be accommodated in the first deposition cavity 381 and the second deposition cavity 382, but does not flow between the first deposition cavity 381 and the second deposition cavity 382. Moreover, the refrigerant deposited in the first deposition cavity 381 may be discharged from the mounting cavity via the first gap 371, and the refrigerant deposited in the second deposition cavity 382 may be discharged from the mounting cavity via the second gap 372.

In an embodiment, one of the main core body 350 and the valve port sealing member 360 is provided with a mounting groove, and the other of the main core body 350 and the valve port sealing member 360 is blocked at an opening of the mounting groove to form the mounting cavity.

Alternatively, in other embodiments, the main core body 350 and the valve port sealing member 360 are provided with two mounting grooves, respectively, and the two mounting grooves are in communication with each other to form the mounting cavity.

The electronic expansion valve further includes a stator assembly 900, the stator assembly 900 is sleeved outside the housing 800, and the stator assembly 900 can drive the rotor assembly 100 to rotate.

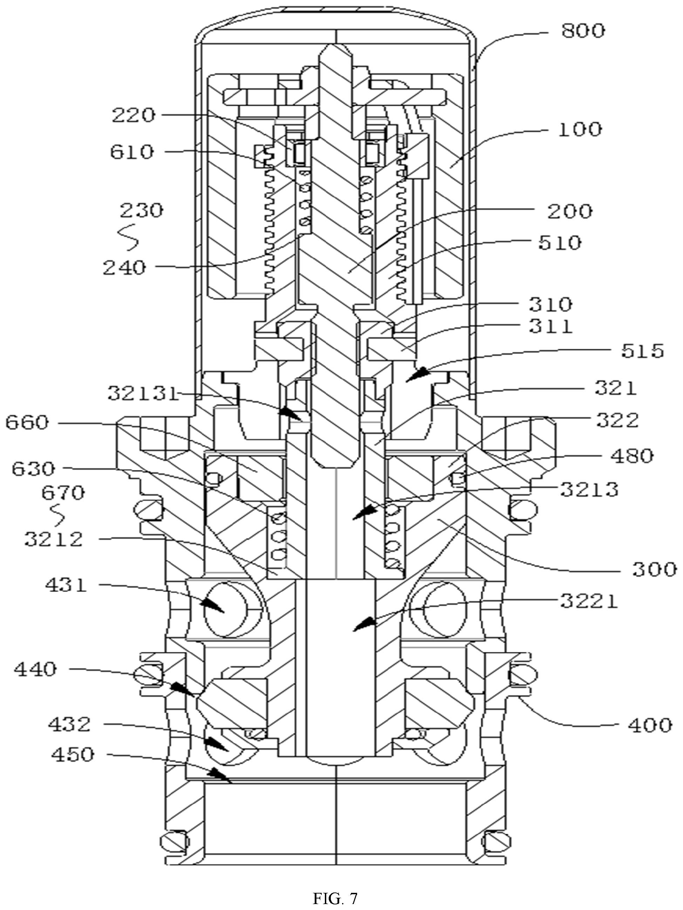

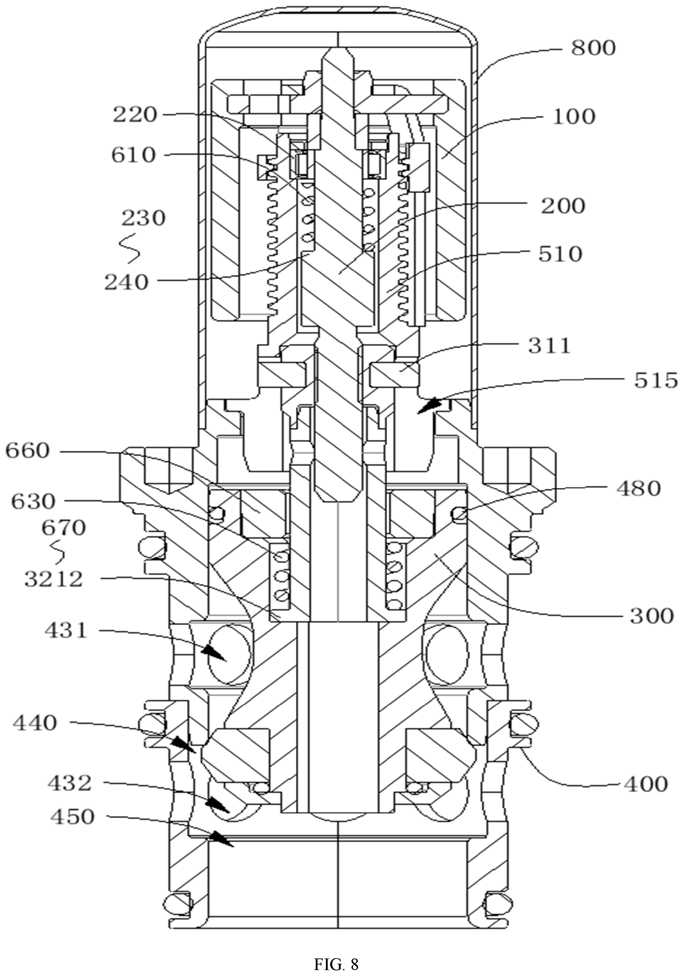

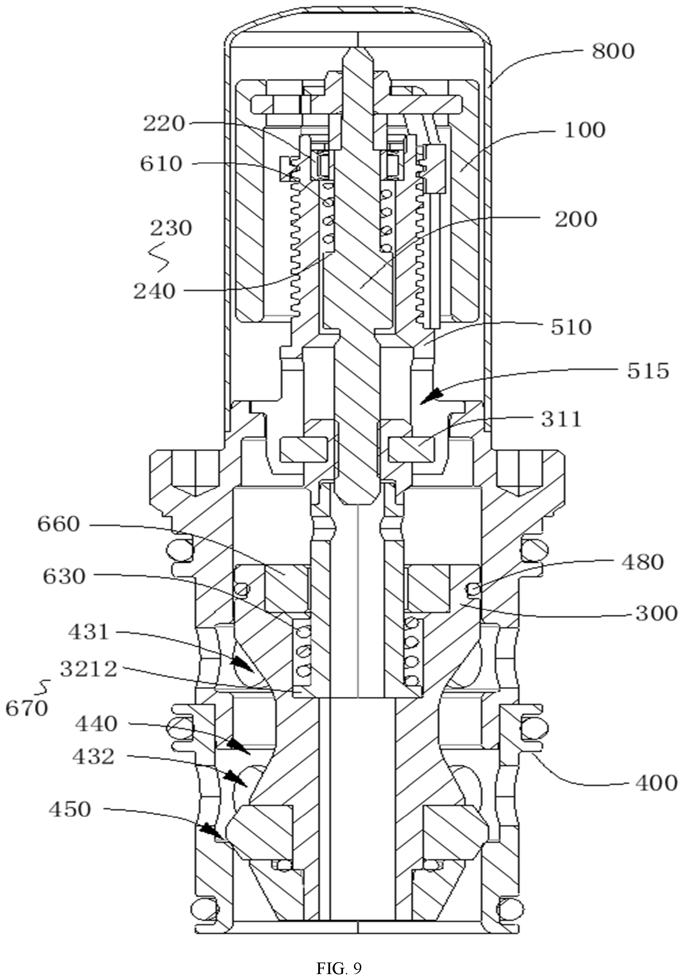

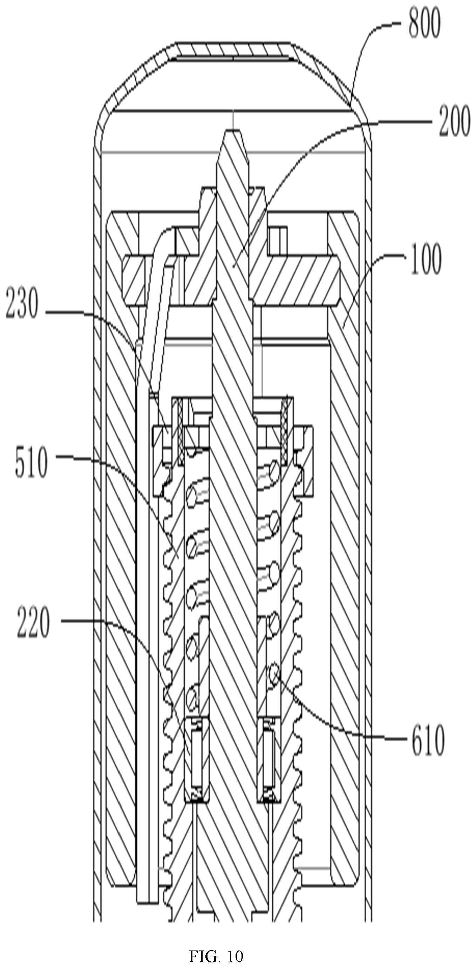

Referring to FIGs. 7 to 10, in an embodiment, the electronic expansion valve further includes either or both of a first pre-tightening structure and a second pre-tightening structure. When the screw rod 200 drives the valve core assembly 300 to block the first valve port 440, the second pre-tightening structure can apply a force for pressing the first valve port 440 to the valve core assembly 300. When the screw rod 200 drives the valve core assembly 300 to block the second valve port 450, the first pre-tightening structure can apply a force for pressing the second valve port 450 to the valve core assembly 300.

By such arrangement, a pre-tightening force of the valve core assembly 300 on the first valve port 440 or the second valve port 450 can be improved, thereby improving a sealing performance of the electronic expansion valve.

Furthermore, in an embodiment, the valve core assembly 300 includes a first valve needle 321 and a second valve needle 322. The screw rod 200 can drive the first valve needle 321 to cause the second valve needle 322 to move toward the rotor assembly 100 along an axis of the second valve needle 322. The electronic expansion valve further includes a stop base 510 connected to the valve base assembly 400. The stop base 510 is sleeved outside the screw rod 200. The stop base 510 can not only limit circumferential rotation of the sliding nut 310, but also limits circumferential rotation of the rotor assembly 100. The stop base 510 may not be sleeved outside the screw rod 200, such that the stop base 510 only limits the circumferential rotation of the sliding nut 310. The valve core assembly 300 further includes a sliding nut 310, a first valve needle 321 and a second valve needle 322. An end of the screw rod 200 away from the rotor assembly 100 is in threaded fit with the sliding nut 310. The sliding nut 310 is in sliding fit with the stop base 510 along the axis of the screw rod 200. The rotor assembly 100 is connected to an end of the screw rod 200 away from the sliding nut 310. The screw rod 200 can drive the sliding nut 310 to cause the second valve needle 322 to move in a direction adjacent to the rotor assembly 100 along the axis of the second valve needle 322 via the first valve needle 321, to close the first valve port 440 via the second valve needle 322. The screw rod 200 can drive the sliding nut 310 to cause the second valve needle 322 to move in a direction away from the rotor assembly 100 and along the axis of the second valve needle 322 via the first valve needle 321, to close the second valve port 450 via the second valve needle 322.

The sliding nut 310 is in fit with the stop base 510 or the valve base assembly 400 via a restricting structure, such that the screw rod 200 can drive the sliding nut 310 to cause the valve core assembly 300 to move along the axis of the screw rod 200, so as to open or close the first valve port 440 and the second valve port 450, and the restricting structure can prevent the sliding nut 310 from rotating around the axis of the screw rod 200.

An operating principle of the sliding nut 310 is as follows: the periphery of the sliding nut 310 is provided with the anti-rotation protrusion 311 extending along the radial direction of the sliding nut 310, the stop base 510 or the valve base assembly 400 is provided with a guide groove 515 extending along the axis of the stop base 510 or the valve base assembly 400 corresponding to the anti-rotation protrusion 311. The end of the anti-rotation protrusion 311 away from the sliding nut 310 extends into the guide groove 515 and can be in sliding fit with the guide groove 515 along the axis of the stop base 510, such that the sliding nut 310 is in sliding fit with the stop base 510 along the axis of the stop base 510. In addition, the restricting structure is formed by the anti-rotation protrusion 311 and the guide groove 515.

Furthermore, in an embodiment, the first pre-tightening structure is configured as a first elastic member 610, one end of the first elastic member 610 is connected to the screw rod 200, and another end of the first elastic member 610 is connected to the stop base 510, a connection manner between the first elastic member and the screw rod 200 includes abutting connection. The first elastic member 610 is configured as a compression elastic member, such that the screw rod 200 and the stop base 510 can be movably fitted with the axis of the screw rod 200 via the first elastic member 610.

Furthermore, in an embodiment, the second pre-tightening structure is configured as a third elastic member 630, an end of the third elastic member 630 is connected to the first valve needle 321, another end of the third elastic member 630 is connected to the second valve needle 322, and connection manners between the third elastic member 630 and the first valve needle 321, and between the third elastic member 630 and the second valve needle 322, are each abutting connection. The third elastic member 630 is configured as a compression elastic member, such that the first valve needle 321 can be movably fitted with the second valve needle 322 along the axis of the screw rod 200 via the third elastic member 630.

When the rotor assembly 100 rotates in a preset direction, and the screw rod 200 drives the valve core assembly 300 to move to the first preset position towards the rotor assembly 100, the valve core assembly 300 can close the first valve port 440, and the second port 432 is in communication with the second valve port 450.

When the valve core assembly 300 moves to the first preset position, and the rotor assembly 100 continues to rotate along the preset direction, the second valve needle 322 cannot continue to move, and the first valve needle 321 can be movably fitted with the second valve needle 322 along the axis of the screw rod 200 via the third elastic member 630. Therefore, the screw rod 200 and the rotor assembly 100 drive the first valve needle 321 to separate from the second valve needle 322 and move along a direction away from the first valve port 440, and drive the first valve needle 321 to squeeze the third elastic member 630 during motion of the screw rod 200, such that the third elastic member 630 generates an elastic force on the second valve needle 322. The elastic force can drive the second valve needle 322 to further squeeze the first valve port 440, such that the second valve needle 322 generates a pre-tightening force on the first valve port 440, thereby improving a sealing performance between the first valve port 440 and the second valve needle 322.

When the rotor assembly 100 rotates in a direction opposite to the preset direction, and the screw rod 200 drives the valve core assembly 300 to move away from the rotor assembly 100 to the second preset position, the valve core assembly 300 can close the second valve port 450, and the first port 431 is in communication with the second port 432 via the first valve port 440.

When the valve core assembly 300 moves to the second preset position, and the rotor assembly 100 continues to rotate in a direction opposite to the preset direction, neither the first valve needle 321 nor the second valve needle 322 can continue to move, and the screw rod 200 can be movably fitted with the valve base assembly 400 along the axis of the screw rod 200 via the first elastic member 610, the screw rod 200 and the rotor assembly 100 move in a direction away from the second valve port 450, and the first elastic member 610 is squeezed during motion of the screw rod 200, the first elastic member 610 generates an elastic force on the screw rod 200 by push of a reaction force, which can drive the screw rod 200 to cause the valve core assembly 300 to further squeeze the second valve port 450, so as to generate a pre-tightening force on the second valve port 450 and improve a sealing performance between the second valve port 450 and the second valve needle 322.

Furthermore, in an embodiment, the first elastic member 610 is configured as a compression spring, and the first elastic member 610 is sleeved outside the screw rod 200.

By such arrangement, processing difficulty of the first elastic member 610 is significantly reduced, and the assembly difficulty of the first elastic member 610 and the screw rod 200 is reduced.

In an embodiment, the third elastic member 630 is configured as a compression spring, the third elastic member 630 is sleeved on an outer side of a part of the first valve needle 321, the second valve needle 322 is sleeved on an outer side of a part of the first valve needle 321, the third elastic member 630 is located in the second valve needle 322, and the third elastic member 630 is located between the first valve needle 321 and the second valve needle 322.

By such arrangement, the processing difficulty of the third elastic member 630 is significantly reduced, and the assembly difficulty of the third elastic member 630 is reduced.

In an embodiment, the electronic expansion valve further includes a first limiting member 220 and a second limiting member 230. One of the first limiting member 220 and the second limiting member 230 is fixed to the stop base 510, and an other of the first limiting member 220 and the second limiting member 230 is fixed to the screw rod 200. One end of the first elastic member 610 is connected to the first limiting member 220, and another end of the first elastic member 610 is connected to the second limiting member 230.

Furthermore, in an embodiment, one of the first limiting member 220 and the second limiting member 230 is a bearing member, and the other of the first limiting member 220 and the second limiting member 230 is a step structure formed by an outer wall of the screw rod 200 or a step structure formed by an inner wall of the stop base 510.

By such arrangement, coaxiality of the screw rod 200 and the stop base 510 can be improved via the first limiting member 220 or the second limiting member 230, and wear degree of the screw rod 200 and the stop base 510 can be significantly reduced.

In an embodiment, the first limiting member 220 is configured as a bearing member. A bearing outer ring of the first limiting member 220 is fixed to the stop base 510. A bearing inner ring of the first limiting member 220 is movably fitted with the outer wall of the screw rod 200 along the axis of the screw rod 200, and the screw rod 200 can drive the bearing inner ring of the first limiting member 220 to rotate synchronously. The second limiting member 230 is a first rod body step 240 formed by the outer wall of the screw rod 200 and is fixed to an outer wall of the screw rod 200. In addition, one end of the first elastic member 610 abuts against the bearing inner ring of the first limiting member 220, and another end of the first elastic member 610 abuts against the second limiting member 230.

The screw rod 200 can drive the bearing inner ring of the first limiting member 220 to rotate synchronously, and the second limiting member 230 is the first rod body step 240 formed by the outer wall of the screw rod 200 and is fixed to the outer wall of the screw rod 200. Therefore, both ends of the first elastic member 610 can rotate synchronously with the screw rod 200. By such arrangement, wear among the first elastic member 610, the screw rod 200 and the valve base assembly 400 is greatly reduced, and a service life of the electronic expansion valve is prolonged.

In another embodiment, the first limiting member 220 is configured as a bearing member, the bearing inner ring of the first limiting member 220 is fixed to the screw rod 200 and rotates synchronously by the screw rod 200, the bearing outer ring of the first limiting member 220 is movably fitted with the outer wall of the stop base 510 along the axis of the stop base 510, and the stop base 510 can restrict the circumferential rotation of the bearing outer ring of the first limiting member 220. The second limiting member 230 is fixed to the stop base 510. In addition, one end of the first elastic member 610 abuts against the bearing outer ring of the first limiting member 220, and another end of the first elastic member 610 abuts against the second limiting member 230.

Since the stop base 510 can limit the circumferential rotation of the bearing outer ring of the first limiting member 220, and the second limiting member 230 is fixed to the stop base 510, the two ends of the first elastic member 610 can be kept in a non-rotating state by the stop base 510. By such arrangement, wear among the first elastic member 610, the screw rod 200 and the stop base 510 is greatly reduced, and the service life of the electronic expansion valve is prolonged.

In an embodiment, the electronic expansion valve further includes a third limiting member 660 and a fourth limiting member 670. One of the third limiting member 660 and the fourth limiting member 670 is fixed to the first valve needle 321, and the other of the third limiting member 660 and the fourth limiting member 670 is fixed to the second valve needle 322. One end of the third elastic member 630 is connected to the third limiting member 660, and the another end of the third elastic member 630 is connected to the fourth limiting member 670.

In an embodiment, the fourth limiting member 670 is configured as a first needle body step 3212 formed by the outer wall of the first valve needle 321 and is fixedly connected to the outer wall of the first valve needle 321.

Furthermore, in an embodiment, an end of the first needle body step 3212 away from the outer wall of the first valve needle 321 is in guiding fit with an inner wall of the second valve needle 3212 along the axis of the second valve needle 322. The end of the first needle body step 3212 away from the outer wall of the first valve needle 321 can be in clearance fit with the inner wall of the second valve needle 3212, which can avoid deflection during motion of the first valve needle 321 relative to the second valve needle 322. By such arrangement, the second valve needle 322 can be in guiding fit with the valve base assembly 400 via the third elastic sealing ring 480, and coaxiality of the second valve needle 322 and the valve base assembly 400 can be ensured.

The valve base assembly 400 is provided with a valve cavity 420. The first valve port 440 and the second valve port 450 are both in communication with a valve cavity 420 located at an end of the valve base assembly 400 adjacent to the rotor assembly 100.

In an embodiment, the sealing assembly disposed between the outer wall of the valve core assembly 300 and the inner wall of the valve base assembly 400 includes a third elastic sealing ring 480. The third elastic sealing ring 480 is sandwiched between the outer wall of the second valve needle 322 and the inner wall of the valve base assembly 400 and being in a compressed state, such that the outer wall of the second valve needle 322 is movably in sealing fit with the valve base assembly 400 via the third elastic sealing ring 480. The second valve needle 322 is provided with a first channel 3221 extending therethrough, and a part of the first valve needle 321 is disposed in the first channel 3221. The first valve needle 321 is provided with a first groove 3213 in communication with the first channel 3221. A side wall of the first groove 3213 is provided with a first hole 32131. The first hole 32131 is in communication with the valve cavity 420. The first channel 3221, the first groove 3213, and the first hole 32131 are in communication with each other, such that the valve cavity 420, and the first valve port 440 and the second valve port 450 are in communication with each other.

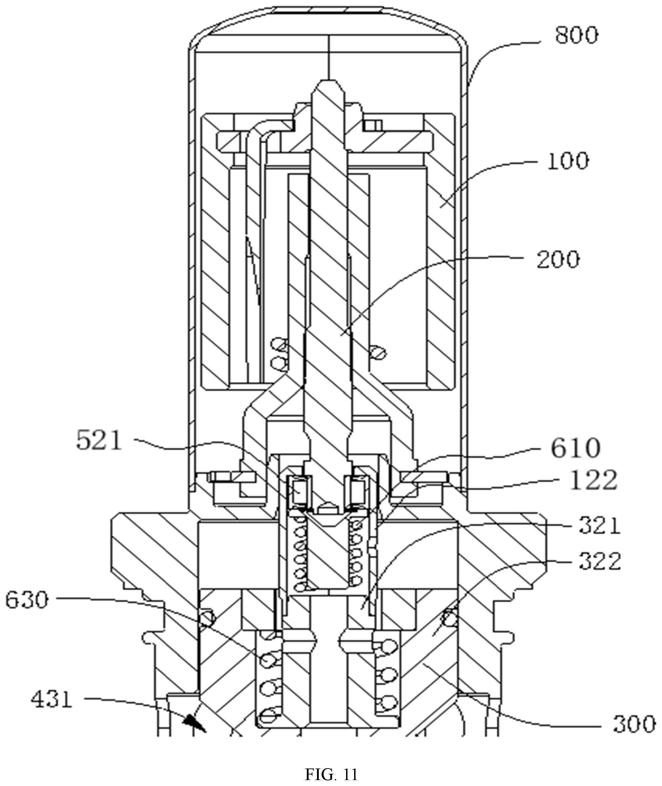

Referring to FIGs. 11, in an embodiment, a sleeve 122 is connected between the first valve needle 321 and the screw rod 200. The sleeve 122 is sleeved on an outer side of an end of the first valve needle 321 and is restricted and connected to the screw rod 52, and a part of the screw rod 52 extends into the sleeve 122. The sleeve 122 may be regarded as a part of the first valve needle 321. The screw rod 200 is provided with a fifth limiting member 521 protruding outward along a radial direction of the screw rod 200. The fifth limiting member 521 is located in the sleeve 122, and an outer diameter of the fifth limiting member 521 is greater than a size of the top opening of the sleeve 122. The fifth limiting member 521 may be a bearing. The first pre-tightening structure is configured as a first elastic member 610, and the first elastic member 610 is located inside the sleeve 122 and is pressed between one end of the first valve needle 321 and the fifth limiting member 521. The first rotor assembly 100 and the screw rod 200 rotate circumferentially as a whole and move up and down along the axis of the electronic expansion valve. The first valve needle 321 and the second valve needle 322 move vertically along the axis of the electronic expansion valve by the screw rod 200. The first elastic member 610 is maintained in a compressed state, and by an elastic force of the first elastic member 610, the fifth limiting member is in contact with a top of the sleeve 122. When the second valve needle 322 closes the second valve port 450, a bottom of the first valve needle 32 is in contact with the second valve needle 322. The first valve needle 321 and the second valve needle 322 cannot move downward, the screw rod 200 continues to move downward relative to the sleeve 122, the fifth limiting member 521 is detached from the top of the sleeve 122, compression degree of the first elastic member 610 increases, the first elastic member 630 applies an elastic force to the first valve needle 321 in a downward direction, and the elastic force of the first elastic member 630 is transmitted to the second valve needle 322, such that the second valve needle 321 closes the second valve port 450 to avoid the second valve port 450 from leaking.

The various technical features of the above embodiments can be combined in any way. In order to make the description concise, not all possible combinations of the various technical features in the above embodiments have been described.

However, as long as there is no contradiction in the combination of these technical features, they should be considered within the scope of the specification. The above embodiments only express several embodiments of the present application, and their descriptions are more specific and detailed, but should not be understood as limiting the scope of the disclosure. It should be pointed out that for ordinary skill in the art, several modifications and improvements can be made without departing from the concept of the disclosure, which are within the scope of protection of the disclosure. Therefore, the scope of protection of the present application should be based on the attached claims.

## Claims

1. An electronic expansion valve, **characterized by** comprising a rotor assembly, a screw rod, a valve core assembly and a valve base assembly, wherein the valve core assembly is configured to move relative to the valve base assembly along an axis of the screw rod, one end of the screw rod is fixed to the rotor assembly, another end of the screw rod is connected to the valve core assembly, and the rotor assembly is configured to drive the valve core assembly to move via the screw rod; and
the valve base assembly is provided with a first valve port and a second valve port, the electronic expansion valve is further provided with either or both of a first pre-tightening structure and a second pre-tightening structure, and when the screw rod drives the valve core assembly to block the first valve port, the second pre-tightening structure is configured to apply an acting force for pressing the first valve port to the valve core assembly; and when the screw rod drives the valve core assembly to block the second valve port, the first pre-tightening structure is configured to apply an acting force for pressing the second valve port to the valve core assembly.

2. The electronic expansion valve of claim 1, wherein the valve core assembly comprises a first valve needle and a second valve needle, the screw rod is configured to drive the first valve needle to cause the second valve needle to move along an axis of the first valve needle toward a direction adjacent to the rotor assembly, to close the first valve port via the second valve needle, and the screw rod is configured to drive the first valve needle to cause the second valve needle to move along the axis of first valve needle toward a direction away from the rotor assembly, to close the second valve port via the second valve needle.

3. The electronic expansion valve of claim 2, further comprising a stop base connected to the valve base assembly, wherein the stop base is sleeved on an outer side of the screw rod, the first pre-tightening structure is configured as a first elastic member, one end of the first elastic member is connected to the screw rod, another end of the first elastic member is connected to the stop base,
the first elastic member is further configured as a compression elastic member, the screw rod is movably fitted with the stop base along the axis of the screw rod via the first elastic member, and/or the first elastic member is further configured as a compression elastic, and the first elastic member is sleeved on the outer side of the screw rod.

4. The electronic expansion valve of claim 3, further comprising a first limiting member and a second limiting member, wherein one of the first limiting member and the second limiting member is fixed to the stop base, the other one of the first limiting member and the second limiting member is fixed to the screw rod, one end of the first elastic member is connected to the first limiting member, and another end of the first elastic member is connected to the second limiting member.

5. The electronic expansion valve of claim 4, wherein one of the first limiting member and the second limiting member is configured as a bearing member, and the other one of the first limiting member and the second limiting member is configured as a step structure formed by an outer wall of the screw rod or an inner wall of the stop base.

6. The electronic expansion valve of claim 2, wherein the second pre-tightening structure is configured as a third elastic member, one end of the third elastic member is connected to the first valve needle, another end of the third elastic member is connected to the second valve needle, the third elastic member is configured as a compression elastic member, such that the first valve needle and the second valve needle are movably fitted with each other along the axis of the screw rod via the third elastic member; and
the third elastic member is configured as a compression spring, the third elastic member is sleeved outside one part of the first valve needle, the second valve needle is sleeved outside another part of the first valve needle, and the third elastic member is located between the first valve needle and the second valve needle.

7. The electronic expansion valve of claim 6, further comprising a third limiting member and a fourth limiting member, wherein one of the third limiting member and the fourth limiting member is fixedly connected to the first valve needle, the other one of the third limiting member and the fourth limiting member is fixed to the second valve needle, one end of the third elastic member is connected to the third limiting member, and another end of the third elastic member is connected to the fourth limiting member.

8. The electronic expansion valve of claim 2, further comprising a third elastic sealing ring, wherein the third elastic sealing ring is sandwiched between an outer wall of the second valve needle and an inner wall of the valve base assembly and being in a compressed state, and the outer wall of the second valve needle is movably in sealing fit with the valve base assembly via the third elastic sealing ring.

9. The electronic expansion valve of claim 8, wherein the second valve needle is provided with a first channel extending therethrough, and a part of the first valve needle is located in the first channel; the first valve needle is provided with a first groove in communication with the first channel, a side wall of the first groove is provided with a first hole, and the first hole is in communication with the valve cavity.

10. The electronic expansion valve of claim 2, further comprising a stop base, wherein the stop base is connected to the valve base assembly, the valve core assembly further comprises a sliding nut, an end of the screw rod away from the rotor assembly is in threaded fit with the sliding nut, the sliding nut is in fit with the stop base or the valve base assembly by a restricting structure, the screw rod is configured to drive the sliding nut to cause the valve core assembly to move in the axis of the screw rod to open or close the first valve port and the second valve port, and the restricting structure is configured to prevent the sliding nut from rotating around an axis of the screw rod.

11. The electronic expansion valve of claim 10, wherein a periphery of the sliding nut is provided with an anti-rotation protrusion extending along a radial direction of the sliding nut, the stop base or the valve base assembly is provided with a guide groove extending along an axis of the electronic expansion valve and corresponding to the anti-rotation protrusion, an end of the anti-rotation protrusion away from the sliding nut extends into the guide groove and is slidably in fit with the guide groove along the axis of the electronic expansion valve, and the restricting structure is formed by the anti-rotation protrusion and the guide groove.

12. The electronic expansion valve of claim 2, further comprising a sleeve, wherein an end of the first valve needle is connected to the sleeve, and an end of the screw rod adjacent to the first valve needle is located in the sleeve; the first pre-tightening structure is configured as a first elastic member, and the first elastic member is disposed in the sleeve and between the screw rod and the first valve needle; and the screw rod is configured to compress the first elastic member after moving relative to the sleeve along a direction adjacent to the second valve port.

13. The electronic expansion valve of claim 1, wherein a side wall of the valve base assembly is provided with a first port and a second port distributed along an axis of the valve base assembly, the valve base assembly is further provided with a first valve port and a second valve port, the first valve port is located between the first port and the second port, the second valve port is located on a side of the second port away from the first port, the valve core assembly is configured to move relative to the valve base assembly along the axis of the screw rod, one end of the screw rod is fixed to the rotor assembly, and another end of the screw rod is connected to the valve core assembly;
when the rotor assembly drives the valve core assembly to move to a first preset position along a direction adjacent to the rotor assembly by the screw rod, the valve core assembly is configured to close the first valve port, and the second port is in communication with the second valve port; when the rotor assembly drives the valve core assembly to move to a second preset position along a direction away from the rotor assembly by the screw rod, the valve core assembly is configured to close the second valve port, and the first port is in communication with the second port by the first valve port; and
when the valve core assembly is disposed between the first preset position and the second preset position, the first port, the first valve port, the second port, and the second valve port are in communication with each other.

14. The electronic expansion valve of claim 13, wherein a flow area of the second valve port is greater than that of the first valve port.

15. The electronic expansion valve of claim 13, wherein an outer peripheral side of the valve core assembly is provided with a first flow regulating surface in a conical shape, and along a direction from the rotor assembly to the second valve port, the first flow regulating surface is in a contracted shape, and the first flow regulating surface is movably fitted with the second valve port to control an opening degree of the second valve port.

16. The electronic expansion valve of claims 13 or 15, wherein an outer peripheral side of the valve core assembly is provided with a second flow regulating surface, the second flow regulating surface in a conical shape, the second flow regulating surface is in a divergent shape along a direction from the rotor assembly to the second valve port, and the second flow regulating surface is movably fitted with the first valve port to control an opening degree of the first valve port.

17. The electronic expansion valve of claim 13, wherein the valve core assembly comprises a main core body and a valve port sealing member, the valve port sealing member is sleeved on an outer peripheral side of the main core body and is in interference fit with the main core body, the valve core assembly is configured to control opening and closing of the first valve port via an end of the valve port sealing member adjacent to the rotor assembly, and the valve core assembly is configured to control opening and closing of the second valve port via an end of the valve port sealing member away from the rotor assembly.

18. The electronic expansion valve of claim 17, wherein the valve base assembly comprises a first valve base and a second valve base, the first valve port is disposed at an end of the first valve base away from the rotor assembly, the second valve base is connected to the end of the first valve base away from the rotor assembly and sleeved on an outer side of the first valve port, a maximum outer diameter of the main core body is less than an inner diameter of the first valve port, and a maximum outer diameter of the valve port sealing member is greater than an inner diameter of the first valve port and less than an outer diameter of the first valve port.

19. The electronic expansion valve of claim 17, further comprising a second elastic sealing ring sandwiched between the main core body and the valve port sealing member and being in a compressed state.

20. The electronic expansion valve of claim 19, wherein a connecting gap is provided between the main core body and the valve port sealing member, a mounting cavity in communication with the connecting gap is provided between the main core body and the valve port sealing member, the mounting cavity divides the connecting gap into a first gap and a second gap, the second elastic sealing ring is snapped in the mounting cavity and separates the mounting cavity into a first deposition cavity and a second deposition cavity, the first deposition cavity is in communication with the first gap, and the second deposition cavity is in communication with the second gap.
